# EUROPEAN PATENT SPECIFICATION

(11) **EP 0 957 623 B1**
(45) Date of publication and mention of the grant of the patent: **16.01.2002**
(21) Application number: 99303460.2
(22) Date of filing: 04.05.1999
(51) Int. Cl.: H04M 3/50, H04Q 3/00, H04M 15/00, H04M 3/38

(54) **Operator assisted call subscriber screening using an intelligent network interface protocol**
Teilnehmerüberprüfung bei handvermittelten Gesprächen mit einem Schnittstellenprotokoll für ein intelligentes Netzwerk
Interception d'abonné lors d'un appel assisté par un opérateur en utilisant un protocole d'interface d'un réseau intelligent

(30) Priority: 14.05.1998 US 78942
(43) Date of publication of application: 17.11.1999
(73) Proprietor: LUCENT TECHNOLOGIES INC., Murray Hill, New Jersey 07974-0636 (US)
(72) Inventor: Aguilar, Jorge Augusto, Chicago, Illinois 60639 (US); Cai, Yigang, Naperville, Illinois 60565 (US); Hwang, John Tzong-yang, Naperville, Illinois 60540 (US); Koenig, Katherine Anne, Pickerington, Ohio 43147 (US); Rinker, Timothy Gwen, Naperville, Illinois 60540 (US); Scheppele, Kenneth Jerome, Carol Stream, Illinois 60188 (US); Tsai, Steve Wutien, Lisle, Illinois 60532 (US)
(74) Representative: Watts, Christopher Malcolm Kelway, Dr.

(56) References cited:
- EP-A- 0 609 016
- EP-A- 0 711 058
- US-A- 4 756 020
- US-A- 5 465 293
- US-A- 5 680 446
- US-A- 5 901 207

## Description

### Technical Field

The invention relates to a method of processing operator-assisted calls, and more particularly to providing subscriber screening using a network based subscriber database in a switch control point and using features of an ETSI INAP interface protocol.

### Description of the Prior Art

U.S. Patent Number 5,465,293 issued November 7, 1995 to M. S. Chiller et al. Shows a method and apparatus for screening an in bound collect call from a foreign country at an operator service position by means of a screening database of telephone numbers that are non-billable for collect calls. This known system operates at a tandem switch conveying the international collect call. The query of the database from the operator service position is by existing C7 signaling over a dedicated trunk line. The dedicated trunk line expedites the query and the response thereto.

Some previously known systems require their switch-based subscriber databases to provide permission list checks. Other previously known systems require their LAN facilities and maintenance for their OSPS Subscriber Screening to be provided through the Global Service Management System (GSMS).

Thus, there is a need in the art for an OSPS subscriber screening that can query the relevant databases quickly and according to a standard interface protocol.

### Summary of the Invention

Briefly stated in accordance with one aspect of the invention, the aforementioned problem is overcome by providing a feature that provides for subscriber screening for operator-assisted calls, using the network based subscriber database in a service control point through an intelligent network interface protocol. This subscriber screening feature taps into a common network based subscriber database using the intelligent network interface protocol. The intelligent network interface protocol allows for more information to be passed between the operator service position and the network based subscriber database, thus providing a subscriber screening that is more reliable, flexible and efficient.

In accordance with another aspect of the invention, the aforementioned problem is overcome by providing a method for subscriber screening of an operator-assisted call initiated by a first subscriber directed to a called number. The method including the steps of querying a subscriber data base in a switching control point regarding a subscriber that is placing the operator assisted call using an intelligent network interface protocol; receiving information regarding the subscriber that will be billed for the operator assisted call from the network based subscriber database in the switching control point using said intelligent network interface protocol; and determining if the operator assisted call is completed or not based on said received information. This method provides a highly integrated operator service position interface that is easy to operate, prevents fraud and human error.

### Brief Description of the Drawing

FIG. 1 is a block diagram of an example of a system that performs subscriber screening in response to a telephone call.

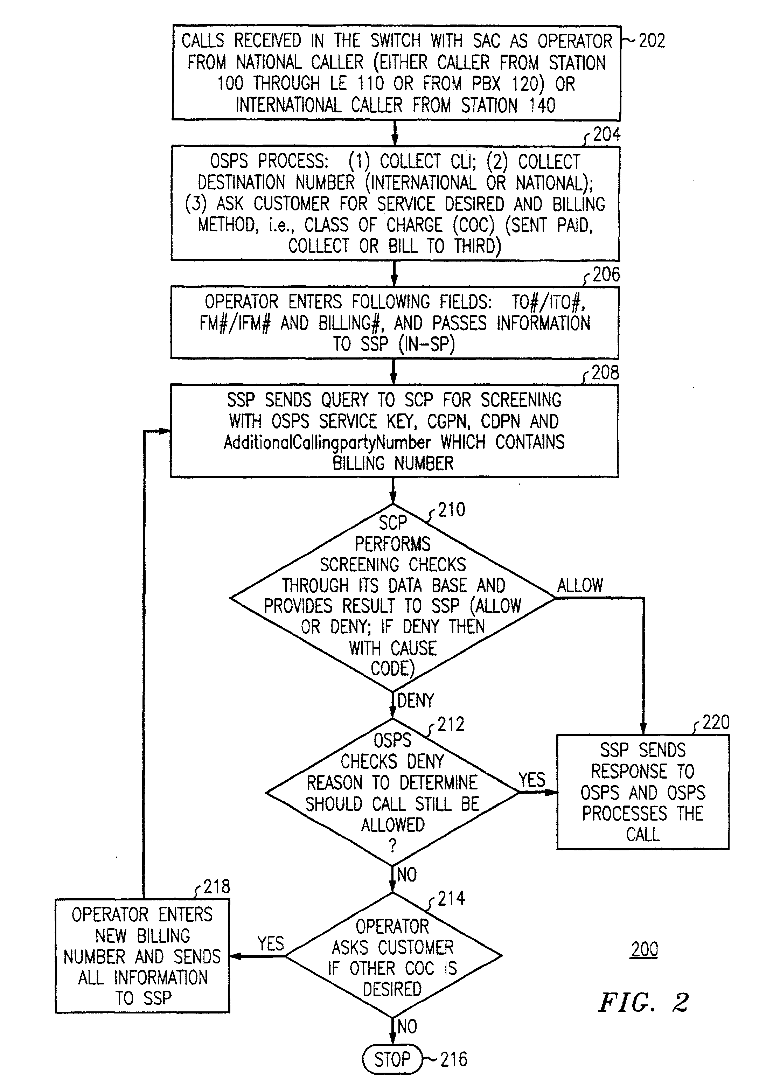

FIG. 2 is a logic flow diagram of a method for providing subscriber screen in response to a call.

FIG. 3 is a call flow diagram of an operator assisted call according to the present invention.

### Detailed Description

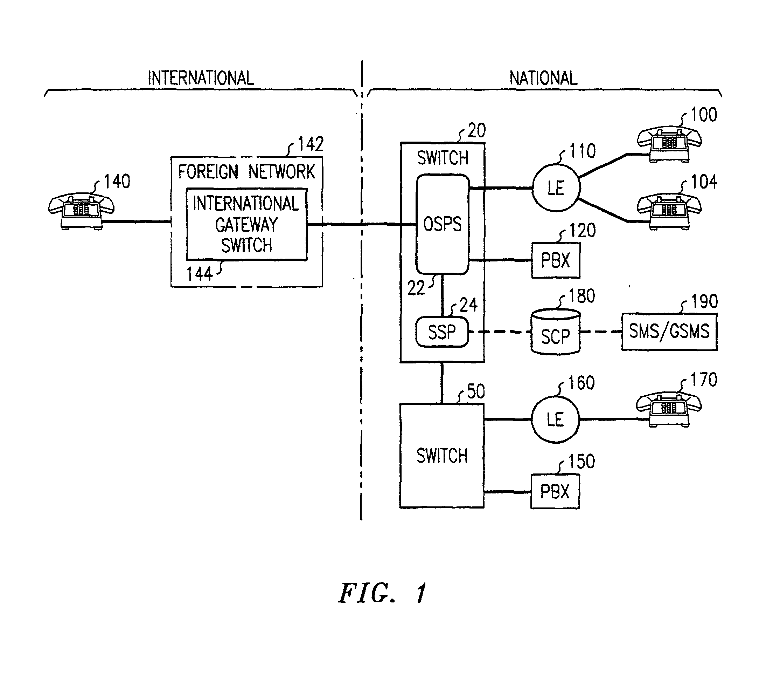

Referring now to FIG. 1, a representative arrangement for practicing the invention is shown. A switch 20, such as a 5ESS® by Lucent Technologies Inc., has an Operator Service Position Station (OSPS) to provide various OSPS operation and/or services, especially those related to subscriber screening. In this illustration, a national caller places a call on either from station 100 through local exchange switch 110 connected to switch 20 or from a private branch exchange 120 which is connected to switch 20. Alternatively, an international caller 140 places an operator assistance call via foreign network 142 and international gateway switch 144 to switch 20 and OSPS 22. The operator assisted call may be for a subscriber station associated with switch 20 (local exchange switch 110) such as station 104 or associated with a similar switch 50 such as PBX station 150 or subscriber station 170 through local exchange switch 160. For each case, some type of subscriber screening service will be performed by OSPS 22.

The subscriber screening service of the present invention is provided through the inter-working of a service control point (SCP) 180, such as SCP2000 by Lucent Technologies Inc., the OSPS 22, switch service point (SSP) 24 and an intelligent network (IN) of a telecommunication switch 20, such as a SESS switch. For an operator-assisted call, when the required information for screening has been gathered, the OSPS 22 automatically initiates a subscriber screening query by informing the IN with all the screening information. The IN then constructs an ETSI INAP Initial-DP operation with the screening information, and an OSPS LD/ILD call (an operator assisted national or international long distance call) indication, and sends the operation to SCP 180. The SCP 180 will access the appropriate Service Logic for the OSPS LD/ILD call. If the Service Logic allows the call, the SCP 180 will reply to the IN system in the switch 20 with a "Connect call" operation. Otherwise, the SCP 180 will reply with a "Release call" operation. In both cases, the IN will relay the screening results to the OSPS 22, where the results are displayed, and appropriate restriction to prevent fraud, if any, is applied to the call.

This OSPS Network-based Subscriber Screening via SCP feature is intended for single-query billing allowance screening without requiring additional query, for example, for authorization code verification. However, the underlying general mechanism in the switch 20 is evolvable to accommodate future expansion of Subscriber Screening functionality in GSMS/SCP 190 - for example, the Originating Line Screening (OLS), or the Terminating Code Screening (TCS). For expansion requiring additional query, as for the authorization code verification, some additional INAP operations need to be introduced on top of this feature, as will be explained below.

Referring now to FIGs. I and 2, a specific embodiment of a method 200 according to the invention is shown. Method 200 begins with action 202 where a call is received in the switch 20 with SAC as operator from a national caller or international caller. After the call is received, method 200 progresses to action 204. At action 204 OSPS 22 collects the calling line identification (CLI) number, the called or destination number either national or international, and asks customer for service desired and billing arrangement desired. Examples of service desired are station-to-station, person-to-person and collect. Examples of billing arrangements are sent paid, collect and bill to third party. After action 204, method 200 progresses to action 206. At action 206, an operator (either human or appropriately equipped automated system) originating the operator assisted call enters data into the national or international called party number field (TO#/ITO#), the national or international calling party number field (FM#/IFM#), and the billing number data field such as billed to the calling party, billed to the called party, or billed to a third party. Once these data fields have the appropriate entries made by the operator, this information is forwarded to SSP 24 which begins an intelligent network system process (IN-SP) in which a database query is prepared and the method 200 progresses to action 208. At action 208, SSP 24 transmits the database query to SCP 180 for screening with the following data fields: OSPS service key, CGPN, CDPN, and AdditionalCallingPartyNumber (which contains the billing number). The results of this screening are sent to and the method 200 progresses to determination 210.

Determination 210 determines whether to allow or deny the operator assisted call in process. SCP 180 performs this determination after making screening checks through its database and provides the allow or deny result to SSP 24. If the result is a denial, then a cause code for the denial is also provided to SSP 24 and method 200 progresses to determination 212. If the result is an allowance of the call as structured the method 200 progresses to action 220.

Determination 212 checks the deny cause code from SCP 180 to determine if this specific deny cause code falls into one of the allow anyway categories of OSPS 22, and if so method 200 progresses to action 220. Two such categories are:
*Treatment-For-Billing-Number-Not-Found,* which may be preset to allow at OSPS 22 a call whose billing number was not found at SCP 180 for treatment-for-billing-number-not-found, and
*Indeterminate-Call-Allowed,* indicating an indeterminate condition and a Recent Changeable parameter in the system, which together can be preset to allow indeterminate calls.

If at determination 212 OSPS 22 determines the deny cause code does not fall within one of the allow anyway categories, method 200 progresses to determination 214.

Determination 214 has OSPS 22 transmit the denial to the party originating the operator assisted call and ask that party if another class of charge (COC) for the billing is desired and then determine if the party's answer is yes or no. If the answer is no, then the method 200 progresses to action 216 which is to stop further progression of method 200 for this calling party, otherwise if the answer is yes, the method 200 progresses to action 218. At action 218, the operator (human or automated) asks what type of other billing is desired and enters the billing number data that corresponds to the originating party's response and transmits all of the information to SSP 24 and reenters action 208. The loop of action 208, determinations 210, 212, 214 and action 218 may be repeated until stop action 216 is reached or an allowance at either determination 210 or 212 sends method 200 to action 220. Action 220 is reached when the operator assisted call is allowed and at action 220 SSP 24 sends the allowance response to OSPS 22 and the OSPS processes the call to connect it to the called party. This ends the method 200 of screening an operator assisted call.

According to another embodiment of the invention, a method for providing an operator-assisted call includes an operator entering information in one or more of the following fields: a national or international called party number (TO#/ITO#), a national or international calling party number (FM#/IFM#), and a Class of Charge (COC) of PAID (billed to the calling party), COLLECT (billed to the called party), or a third party number for billing.

These fields are screened against a subscriber database in SCP 180 before the call is allowed for completion. These fields are collectively called fields of Screening Data. An operator-assisted call may be, for example, (1) a Quasi call; (2) a Demand call; (3) a CLI Bailout call, (4) an inward call, or (5) a call from a Completed Call Record (CCR) retrieval. However, no screening will be applied if the calling party number is a free phone number.

When one of the Screening Data fields is entered ( or modified) and validated, a Subscriber Screening query will be automatically initiated if the rest of the Screening Data are available and call gapping is not applicable to the call (call gapping addressed below). The query is sent to the IN with the following query information:
1. a Service Key;
2. a calling party number,
3. a called party number, and
4. a billing number.

The billing number may be the calling party number, the called party number, or a third party number, if the COC is PAID, COLLECT, or a third party number billing, respectively. An indication of the Nature of Address (NOA), either NATIONAL or INTERNATIONAL, is also included for each number. Additionally, a Service Key of OSPS LD/ILD is used to indicate that this query is for an OSPS LD/ILD call. This allows the SCP 180 to handle the call in a specific way for OSPS LD/ILD calls.

Once a Subscriber Screening query is launched, a query reply timer is set to wait for the reply. While waiting for the reply, a Subscriber Screening in progress indicator is displayed to the operator, and some of the keys on the Intelligent Communication Workstation terminal are blocked mainly to prevent any interim Screening Data modification and call completion. The indicator and the key blocking will be lifted upon a query reply or a time-out on the query timer.

If a call is considered to be allowed, an indicator, such as a check mark, is placed next to the billing number and, according to current functionality, is displayed to inform the operator of a positive result. The billing number is the calling party number, the called party number, or the third party number, if the COC is PAID, or COLLECT, or a third party number for billing, respectively. Based on the display, the operator may proceed to complete the call, or modify the Screening Data per caller's request. If any of the Screening Data are modified and validated, the indicator mark is cleared, and a new Subscriber Screening query will be re-launched. A call is considered to be allowed either
1. when a Connect query reply is received, or
2. when a Release-Call query reply is received with a release-cause indicating billing-number-not-found and an Office Dependent Data (ODD), *Treatment-For-Billing-Number-Not-Found,* is preset to allow the calls. or
3. when a Release-Call query reply is received with a release-cause indicating an indeterminate condition and a Recent Changeable parameter in the system, *Indeterminate-Call-Allowed,* is preset to allow indeterminate calls.

In the latter two cases, a complaint message will be displayed to inform the operator of the condition. The complaint message is fetched from a Recent Changeable Complaint message table, based on the release-cause received in the query reply. The release-cause will be displayed in the *Reason* field, which will be stored in the AMA record generated for the call. The potential indeterminate conditions are
1. SCP 180 encountering an error;
2. time-out on the query reply or the INAP protocol encountering an error in communicating with the SCP 180, and
3. call gapping being applicable to the call.

If a call is considered to be denied, a complaint message as described in the previous section will be displayed to inform the operator of the nature of the problem, a restriction message will be displayed to reveal the restriction, and no call completion attempt will be allowed. A call is considered to be denied when a Release-Call query reply is received, and
1. the associated release-cause indicates a call-rejection, or
2. the release-cause indicates an billing-number-not-found condition as described in the previous paragraph, but the *Treatment-For-Billing-Number-Not-Found* parameter is preset to deny the call. or
3. the release-cause indicates an indeterminate condition as described in the previous paragraph, but the *Indeterminate-Call-Allowed* parameter is preset to deny indeterminate calls.

The restriction message is fetched from a Recent Changeable Restriction message table, based on the release-cause. The release-cause itself is displayed in the *Reason* field. The operator may proceed to cancel the call as it is, or modify the Screening Data per caller's request. If the call is canceled, the *Reason* will be saved in the AMA record. If any of the Screening Data is modified and validated, the *Reason* field and the restriction message will be cleared before a new Subscriber Screening query is re-launched..

Call Gapping is an existing Network Management capability for query congestion control, see description below. Prior to initiating a Subscriber Screening query for a call, the applicability of Call Gapping on the call is checked with the Network Management system. If it is applicable, the Subscriber Screening is not initiated to avoid congestion. The call is treated as if a Release-Call query reply with a release-cause indicating an indeterminate condition were received. A *Reason* code is assigned and displayed in the *Reason* field, and a complaint message associated with the call gapping is displayed. After that, the *Indeterminate-Call-Allowed* parameter is checked to determine whether the call is allowed or not.
1. If the call is allowed, a check mark is made and shown next to the billing number and the call is allowed to be completed or
2. If the call is denied, a restriction message is displayed, and any call completion attempt is blocked.
The *Reason* code, if any, will be stored in the AMA record generated for the call.

Upon receiving a query from OSPS, the IN-SP (IN System Process) will send an Initial-DP operation in a TCAP BEGIN message to SCP 180. The Initial-DP operation will have the following parameters containing the OSPS query information as below:

**Table 1 -**

| Parameters of the Initial DP operation | |
|---|---|
| **Initial-DP Parameters** | **OSPS Query Information** |
| Service Key | OSPS LD/ILD |
| Calling Party Number | FM# |
| Called Party Number | TO# |
| Additional Calling Party Number | Billing # |

The NOA indication in OSPS's FM#, TO#, and Billing# shall also be mapped to NOA field in corresponding parameters of the Initial-DP operation.

Upon sending the Initial-DP operation, IN-SP pegs a "Number of Queries to SCP" measurement and sets a query reply timer.

As a result of the Initial-DP operation, IN-SP may receive a Connect operation or a Release-Call operation from SCP 180. In either cases, the query reply timer is canceled.

Upon receiving a Connect operation from SCP 180, IN-SP will send a Connect query reply to OSPS.

Upon receiving a Release-Call operation from SCP 180, IN-SP will send a Release-Call query reply with the release-cause value in the Release-Call operation to OSPS, and pegs another measurement counter to increment the count of the "Number of Calls Failed By SSP Because of SCP Instructions or Failure at SSP".

Upon receiving the CallGap operation from SCP 180 (as explained below), IN-SP will format a request with the gap criteria, the gap indicators (including gap duration and gap interval), the control type (optional) and the gap treatment (optional) information in the Call-Gap operation, and send the request to Network Management to set up call gapping determination mechanism.

In the case that either time expires or protocol errors occur in INAP, IN-SP will send a Release-Call query reply to OSPS with a default (0) release-cause value respectively for time-out and error condition handling.

SCP subscriber screening starts when a query arrives at the SCP 180, autonomous logic will perform a look-up into the Service Determination Network Table (SDNT) using the Service Key parameter value as the key. The SDNT will instruct autonomous logic to either execute Network Logic (CAL logic) first, or proceed directly to perform a look-up on the appropriate Translation Table. Network Logic would be invoked only for services that need special handling before the Translation Table look-up, and ultimate executing of Service Logic also known as customer application language (CAL logic).

Regarding customer application language (CAL) logic and network tables, logic is used to perform a look-up on a Translation Table, the look-up will yield the account number to execute. Autonomous logic will then execute the Service Logic within that account. (An account typically contains Service Logic and service data.)

If Network Logic is executed, it will perform any special handling needed, then it will perform a look-up on the appropriate Translation Table. The Translation Table look-up will yield the account number to execute. Network Logic will then execute the Service Logic within that account. However, if no account number is found in the Translation Table look-up, the Vacant Code processing will be performed.

The SCP 180 will receive a BEGIN message containing an Initial-DP operation when the OSPS launches a Subscriber Screening query. The Initial-DP operation will contain the OSPS query information as in Table 1.

A service determination network table (SDNT) which is part of the SCP 180, contains a new entry for the "OSPS LD/ILD" Service Key value. The SDNT further instructs autonomous logic to execute network logic for this Service Key value.

For an OSPS launched ETSI query, the SCP 180 accesses the Service Logic within the GSMS 190 provided LD/ILD account. This is the same account that is accessed by a non OSPS initiated, or direct dialed, LD/ILD call (i.e. there is only one LD/ILD account). Therefore, SCP 180 Network Logic must ensure that the Service Logic within the GSMS LD/ILD account is executed for the OSPS launched query.

Network Logic recognizes the "OSPS LD/ILD" Service Key value and performs the following tasks for this Service Key value.
1. Network Logic must use the billing number received in the additionalCallingPartyNumber parameter of the Initial-DP operation as the key into the Calling Party Number Translation Table.
2. Network Logic must set the value of the ServiceType pre-defined variable to be CGPN. This pre-defined variable is used internally by the SCP 180 for network management.

If the billing number used as the key into the Calling Party Number Translation Table is not found in the Calling Party Number Translation Table, Vacant Code processing will be performed.

The Vacant Code account will recognize the Service Key value of "OSPS LD/ILD". For this Service Key value, vacant code will perform an "EXIT <ft_index>" statement. The CAL "EXIT <ft_index>" statement will cause a Release-Call operation to be sent to the switch 20. The Release-Call operation will contain a cause value that is equivalent to the Final Treatment Table value associated with the "ft_index" parameter passed to the EXIT statement. The switch 20 will recognize a cause value of "1" to mean "call denied due to account not found". The Network Care system that provisions the Final Treatment Table should associate the Final Treatment Table index of 19 with the cause value of 1. Therefore, the Service Logic will use the "EXIT 19" statement for this case.

The GSMS LD/ILD Service Logic must recognize the "OSPS LD/ILD" value for the Service Key variable and perform the following tasks for this Service Key. In other words, the following must be provided:
1. The LD/ILD Service Logic must use the value in the IncomingACGPNo pre-defined variable to perform the look-up into the LD/ILD account's customer screening data. In the direct dialed case, the Service Logic expects the CGPNoIn pre-defined variable to contain the number that will be billed, or the subscriber's number (i.e. direct dialed calls are always sent-paid calls). Therefore, it uses the CGPNoIn pre-defined variable as the key to determine subscriber screening. However, in the OSPS initiated query case, the number that will be billed, or the subscriber's number, is contained in the IncomingACGPNo pre-defined variable. Therefore, Service Logic must use this number to determine subscriber screening.
2. If the GSMS Service Logic determines that the call is allowed, it will perform an #ANIConnect macro (need input on all parameter values used). This will cause an Invoke-Connect operation to be returned to the switch 20. [No #ANIBilling macro will be performed.]
3. If the GSMS Service Logic determines that the call is denied, it will execute a CAL "EXIT ft_index" statement. The CAL "EXIT ft_index" statement will cause a Release-Call operation to be sent to the switch 20. The Release-Call operation will contain a cause value that is equivalent to the Final Treatment Table value associated with the ft_index parameter passed to the EXIT statement. The switch 20 will recognize a cause value of "21" to mean "call denied due to screening". The Network Care system that provisions the Final Treatment Table should associate the Final Treatment Table index of 20 with the cause value of 21. Therefore, the Service Logic should use the "EXIT 20" statement for the deny case.

For error handling, if the SCP 180 encounters an internal error, the application will send a Release-Call operation to the SSP 24. The cause parameter within the Release-Call operation will be equal to the value in the Final Treatment Network Table associated with the index of 16.

If the SCP 180 tries to execute the Vacant Code account and the account does not exist (i.e. has not been provisioned), a Release-Call operation will be sent to the SSP 24. The cause parameter within the Release-Call operation will be equal to the value in the Final Treatment Network Table associated with the index of 17.

If the SCP 180 does not find the Service Key value in the SDNT, a Release-Call operation will be sent to the SSP 24. The cause parameter within the Release-Call operation will be equal to the value in the Final Treatment Network Table associated with the index of 18.

If the SCP 180 finds the Service Key value in the SDNT, but the Translation Table indicated does not exist, a Release-Call operation will be sent to the SSP 24. The cause parameter within the Release-Call operation will be equal to the value in the Final Treatment Network Table associated with the index of 18.

There are no new SCP 180 measurements associated with the OSPS Network-based Subscriber Screening feature. As is currently done, the DSIQRYR measurement is pegged when the SCP 180 receives the BEGIN message with an Initial-DP operation As is also done currently, the DSIRTPN measurement will be pegged if a Connect operation is sent.

There will be no changes to SCP 180 Data Collection for OSPS Network-based Subscriber Screening. The callingPartyNumber received in the Initial-DP operation will be used in the Calling Party Number fields of the ATTEMPT and SUMMARY binary reports. Likewise, the billing number received in the AdditionalCallingPartyNumber parameter of the Initial-DP operation will be used in the Additional Calling Party Number fields of the ATTEMPT and SUMMARY binary reports.

While implementing OSPS Network-based Subscriber Screening feature using ETSI INAP protocol, there will be no new Network Management capabilities associated with this feature. The following section is a description of how existing capabilities will be applied to the OSPS launched query.

Queries initiated by the OSPS 22 will come into the SCP 180 on the same signaling links as all direct dialed queries. The queries will also be placed on the same incoming queues as all direct dialed queries. An OSPS query may be flushed from the queue if it's time on queue exceeds the maximum time allowed just as a direct dialed query may be flushed.

If the SCP 180 application determines that it is in an overload state (based on the percentage of calls flushed from the incoming message queues), it will include a CallGap operation in the message it sends to the switch 20. The gapCriteria within the CallGap operation will be callingAddressandService. The callingAddressValue will contain the value of the callingPartyNumber from the Initial-DP operation. The Service Key will contain the value of "OSPS LD/ILD".

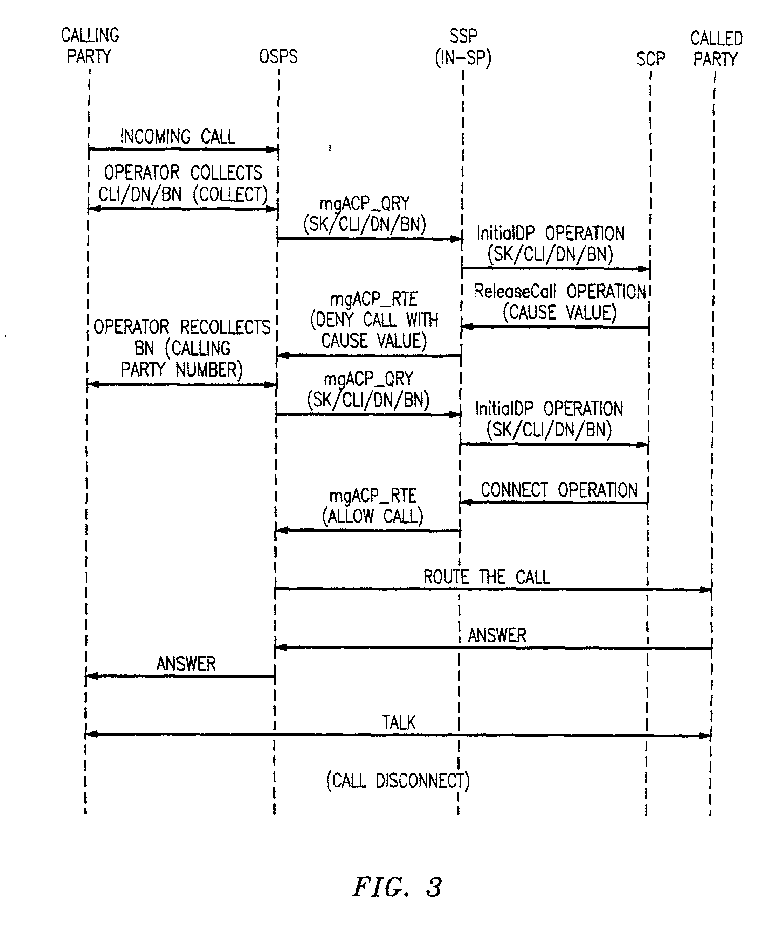

Assuming that an operator assisted call is possible, a call flow according to the present invention is shown in FIG. 3. FIG. 3 shows an example of a specific OSPS/IN interface for subscriber screening through switch 20 internal message and standardized ETSI INAP operations, is shown in FIG. 3. The call flow, as illustrated by FIGs. 1 and 3, begins with the calling party placing a call which arrives at OSPS 22 (the operator services position be it operated by a human or an automated system). In this example, the called party number (COLLECT) is used as the billing number (BN) and the SCP/GSMS service logic determines that BN is bad account or vacant code account and the call should be denied. Next, the operator re-collects from the calling party another billing number (the calling party number, or PAID) and sends a subsequent query to IN. Call flow details are described below.

In response to a placing of an operator assistance call by a calling party, the OSPS 22 collects the calling party number, called party number and billing number from the calling party. The calling party indicator indicates that this is a COLLECT call, for example, so the operator enters the billing number with the called party number. Next, OSPS 22 launches an internal switch query message (mgACP-QRY) to SSP 24 (IN-SP) with Service Key (OSPS LD/ILD), the Calling Party Number, the Called Party Number and the Billing Number. Next, the SSP 24 maps the Service Key (OSPS LD/ILD), the Calling Party Number, the Called Party Number and the Billing Number into associated parameters in InitialDP operation (the billing number is mapped to AdditionalCallingPartyNumber parameter); and then sends the InitialDP operation to the SCP 180.

Upon receiving InitialDP operation, the SCP 180 performs the screening based on the billing number. The service logic determines that the billing number (the called party number) is a bad account or a vacant code account, the SCP 180 sends a ReleaseCall operation with the cause value to the SSP 24. Next, the SSP 24 sends a query reply message (mgACP-RTE) internal to switch 20 with deny reason to the OSPS 22.

The OSPS 22 views the deny reason and decides to re-prompt the calling party if another class of charge for the billing is desired and re-collect the billing number once the calling party is willing to use the calling party number as the new billing number (PAID).

The OSPS 22 fills the billing number with the calling party number (PAID), and sends a new internal switch query message (mgACP-QRY) to SSP 24 (IN-SP) with Service Key (OSPS LD/ILD), the Calling Party Number, the Called Party Number and the Billing Number. The SSP 24 again maps the Service Key (OSPS LD/ILD), the Calling Party Number, the Called Party Number and the Billing Number into associated parameters in a DP operation (the billing number is mapped to AdditionalCallingPartyNumber parameter); and then sends the InitialDP operation to the SCP 180.

Upon receiving this InitialDP operation, the SCP 180 again performs the screening based on the billing number. The service logic again determines if the billing number (this time the calling party number) is valid. It is valid, so the SCP 180 sends a Connect operation to the SSP 24. Upon receiving the Connect operation reply from the SCP 180, the SSP 24 ignores all parameters contained in the Connect operation and sends a connect query reply message (mgACP-RTE) internal to switch 20 with an indication of allowing the call to the OSPS 22.

The OSPS 22 and switch 20 route the call to the called party. The called station rings, the called-party answers and the desired conversation talk starts and the billing number is charged for the service. This call is disconnected once one party hangs up.

## Claims

1. A method for providing subscriber screening for an operator-assisted call initiated by a first subscriber directed to a called number, comprising the steps of:
querying a subscriber database in a switching control point regarding a subscriber that is placing the operator assisted call using an intelligent network interface protocol; and
receiving information regarding the subscriber that will be billed for the operator assisted call from the a network based subscriber database in the switching control point using said intelligent network interface protocol; and
determining if the operator assisted call is completed or not based on said received information.

2. The method of claim 1, wherein said intelligent network interface protocol is an ETSI INAP interface protocol.

3. The method of claim 1, wherein the subscriber information queried by the operator service position system through the intelligent network for subscriber screening is limited to geographic subscriber numbers and not 700, 800, 888, 900 series numbers.

4. The method of claim 1, wherein a translated number from a service control point will not change the destination number on an operator services position screen and not impact operator services position processing the call if the call is allowed by the screening.

5. The method of claim 1, wherein subscriber screening is applied to at least one of a group of numbers including a calling party number, a destination number and a billing number.

6. The method of claim 1, wherein subscriber screening is applied to at least two of a group of numbers including a calling party number, a destination number and a billing number.

7. The method of claim 1, wherein subscriber screening is applied to all three of a group of numbers including a calling party number, a destination number and a billing number.

8. The method of claim 1, wherein call gapping is applied to operator assisted calls.

9. The method of claim 1, further comprising the step of if a service control point returns one operation of a connect call operation and a release call operation to a service switching point in a TCAP END message, returning said TCAP END without containing any other operation.

10. An apparatus for providing subscriber screening for an operator-assisted call initiated by a first subscriber directed to a called number, comprising:
means for querying a subscriber data base in a service control point regarding a subscriber that is placing the operator assisted call using an intelligent network interface protocol;
means for receiving information regarding the subscriber that will be billed for the operator assisted call from the a network based subscriber database in the service control point using said intelligent network interface protocol; and
means for determining if the operator assisted call is completed or not based on said received information.

11. The apparatus of claim 10, wherein said querying means and said
determining means are both part of a telecommunication switch.

## Patentansprüche

1. Verfahren zur Bereitstellung von Teilnehmer-Vorabfrage für eine von einem ersten Teilnehmer eingeleitete, an eine gerufene Nummer gerichtete handvermittelte Verbindung mit folgenden Schritten:
Abfragen einer Teilnehmerdatenbank in einem Vermittlungssteuerungspunkt betreffs eines Teilnehmers, der die handvermittelte Verbindung einleitet, unter Verwendung eines Schnittstellenprotokolls eines intelligenten Netzes; und
Empfangen von Informationen betreffs des Teilnehmers, dem die handvermittelte Verbindung in Rechnung gestellt wird, von der netzbasierenden Teilnehmerdatenbank im Vermittlungssteuerungspunkt unter Verwendung des besagten Schnittstellenprotokolls des intelligenten Netzes; und
Bestimmen, ob die handvermittelte Verbindung zustandegekommen ist oder nicht, auf der Grundlage der besagten empfangenen Informationen.

2. Verfahren nach Anspruch 1, wobei das besagte Schnittstellenprotokoll eines intelligenten Netzes ein Schnittstellenprotokoll ETSI INAP ist.

3. Verfahren nach Anspruch 1, wobei die durch das Handvermittlungsplatzsystem über das intelligente Netz zur Teilnehmer-Vorabfrage abgefragten Teilnehmerinformationen auf geographische Teilnehmernummern, und nicht Nummern der Serie 700, 800, 888, 900 begrenzt sind.

4. Verfahren nach Anspruch 1, wobei eine umgesetzte Nummer von einem Dienstesteuerungspunkt nicht die Zielnummer auf einem Handvermittlungsplatzbildschirm ändert und keinen Einfluß auf die Bearbeitung der Verbindung durch den Handvermittlungsplatz hat, wenn die Verbindung durch die Vorabfrage zugelassen wird.

5. Verfahren nach Anspruch 1, wobei die Teilnehmer-Vorabfrage auf mindestens eine von einer Gruppe von Nummern einschließlich einer Nummer des rufenden Teilnehmers, einer Zielnummer und einer Rechnungsnummer angewandt wird.

6. Verfahren nach Anspruch 1, wobei die Teilnehmer-Vorabfrage auf mindestens zwei von einer Gruppe von Nummern einschließlich einer Nummer des rufenden Teilnehmers, einer Zielnummer und einer Rechnungsnummer angewandt wird.

7. Verfahren nach Anspruch 1, wobei die Teilnehmer-Vorabfrage auf alle drei von einer Gruppe von Nummern einschließlich einer Nummer des rufenden Teilnehmers, einer Zielnummer und einer Rechnungsnummer angewandt wird.

8. Verfahren nach Anspruch 1, wobei Ruflückenbildung auf handvermittelte Verbindungen angewandt wird.

9. Verfahren nach Anspruch 1, weiterhin mit folgendem Schritt: wenn ein Dienstesteuerungspunkt eine Operation Ruf Aufschalten und eine Operation Ruf Freigeben zu einem Dienstevermittlungspunkt in einer Nachricht TCAP END zurücksendet, Rücksenden von TCAP END, ohne irgendeine andere Operation einzuschließen.

10. Vorrichtung zur Bereitstellung von Teilnehmer-Vorabfrage für eine von einem ersten Teilnehmer eingeleitete, an eine gerufene Nummer gerichtete handvermittelte Verbindung mit folgendem:
Mitteln zum Abfragen einer Teilnehmerdatenbank in einem Dienstesteuerungspunkt betreffs eines Teilnehmers, der die handvermittelte Verbindung einleitet, unter Verwendung eines Schnittstellenprotokolls eines intelligenten Netzes;
Mitteln zum Empfangen von Informationen betreffs des Teilnehmers, dem die handvermittelte Verbindung in Rechnung gestellt wird, von der netzbasierenden Teilnehmerdatenbank im Dienstesteuerungspunkt unter Verwendung des besagten Schnittstellenprotokolls eines intelligenten Netzes; und
Mitteln zum Bestimmen, ob die handvermittelte Verbindung zustandegekommen ist oder nicht, auf der Grundlage der besagten empfangenen Informationen.

11. Vorrichtung nach Anspruch 10, wobei die besagten Abfragemittel und besagten Bestimmungsmittel beide Teil einer Telekommunikationsvermittlungsstelle sind.

## Revendications

1. Procédé de filtrage d'abonnés pour un appel assisté par un opérateur lancé par un premier abonné en direction d'un numéro appelé, comprenant les étapes consistant à :
interroger une base de données d'abonnés dans un point de commande de commutation concernant un abonné effectuant l'appel assisté par un opérateur à l'aide d'un protocole d'interface de réseau intelligent ;
recevoir des informations concernant l'abonné qui sera facturé pour l'appel assisté par un opérateur en provenance d'une base de données d'abonnés en réseau dans le point de commande de commutation à l'aide dudit protocole d'interface de réseau intelligent ; et
déterminer si l'appel assisté par un opérateur aboutit ou n'est pas basé sur lesdites informations reçues.

2. Procédé selon la revendication 1, dans lequel ledit protocole d'interface de réseau intelligent est un protocole d'interface ETSI INAP.

3. Procédé selon la revendication 1, dans lequel les informations d'abonnés interrogées par le système de position de services d'opérateur par le biais du réseau intelligent pour le filtrage d'abonnés sont limitées aux numéros géographiques d'abonnés et non aux numéros des séries 700, 800, 888, 900.

4. Procédé selon la revendication 1, dans lequel un numéro traduit issu du point de commande de services ne modifiera pas le numéro de destination sur un écran de position de services d'opérateur et n'aura pas d'effet sur la position de services d'opérateur traitant l'appel si l'appel est admis par le filtrage.

5. Procédé selon la revendication 1, dans lequel le filtrage d'abonnés est appliqué à au moins un numéro d'un groupe de numéros comprenant un numéro de demandeur, un numéro de destination et un numéro de facturation.

6. Procédé selon la revendication 1, dans lequel le filtrage d'abonnés est appliqué à au moins deux numéros d'un groupe de numéros comprenant un numéro de demandeur, un numéro de destination et un numéro de facturation.

7. Procédé selon la revendication 1, dans lequel le filtrage d'abonnés est appliqué à l'ensemble des trois numéros d'un groupe de numéros comprenant un numéro de demandeur, un numéro de destination et un numéro de facturation.

8. Procédé selon la revendication 1, dans lequel un espacement d'appels est appliqué aux appels assistés par un opérateur.

9. Procédé selon la revendication 1, comprenant en outre l'étape consistant à, si un point de commande de services renvoie une opération parmi une opération d'établissement d'appel et une opération de libération d'appel à un point de commutation de services dans un message TCAP END, renvoyer ledit message TCAP END sans qu'il contienne aucune autre opération.

10. Appareil de filtrage d'abonnés pour un appel assisté par un opérateur lancé par un premier abonné en direction d'un numéro appelé, comprenant :
un moyen pour interroger une base de données d'abonnés dans un point de commande de services concernant un abonné effectuant l'appel assisté par un opérateur à l'aide d'un protocole d'interface de réseau intelligent ;
un moyen de réception des informations concernant l'abonné qui sera facturé pour l'appel assisté par un opérateur en provenance d'une base de données d'abonnés en réseau dans le point de commande de services à l'aide dudit protocole d'interface de réseau intelligent ; et
un moyen pour déterminer si l'appel assisté par un opérateur aboutit ou n'est pas basé sur lesdites informations reçues.

11. Appareil selon la revendication 10, dans lequel ledit moyen d'interrogation et ledit moyen de détermination font tous deux partie d'un commutateur de télécommunication.
